# EUROPÄISCHE PATENTSCHRIFT

(11) **EP 0 699 379 B1**
(45) Veröffentlichungstag und Bekanntmachung des Hinweises auf die Patenterteilung: **21.11.2001**
(21) Anmeldenummer: 95112420.5
(22) Anmeldetag: 08.08.1995
(51) Int. Cl.: A01D 17/10

(54) **Siebfördervorrichtung für Hackfruchterntemaschinen**
Sieving conveyor blet for potato diggers
Bande trieuse-transporteuse pour récolteuse de tubercules

(30) Priorität: 01.09.1994 DE 9414130 U
(43) Veröffentlichungstag der Anmeldung: 06.03.1996
(73) Patentinhaber: Franz Grimme Landmaschinenfabrik GmbH & Co. KG., D-49401 Damme (DE)
(72) Erfinder: Kalverkamp, Klemens, D-49401 Damme (DE); Tepe, Richard, D-49401 Damme (DE)
(74) Vertreter: Busse & Busse Patentanwälte

(56) Entgegenhaltungen:
- EP-A- 0 372 876
- DE-C- 914 200
- GB-A- 2 198 103
- US-A- 1 341 454
- US-A- 1 547 584

## Beschreibung

Die Erfindung bezieht sich auf eine Siebfördervorrichtung für Hackfruchterntemaschinen in einer Ausbildung gemäß dem Oberbegriff des Anspruchs 1.

Bei einer bekannten Siebfördervorrichtung (EP-A-0 372 876) ist ein endloses Siebförderband vorgesehen, das aus zumindest zwei Förderriemen und auf diesen befestigten Querförderstreben besteht und um in einem Gehäuse drehbar gelagerte Umlenkrollen umläuft, von denen zumindest eine Gruppe von gleichachsig angeordneten Umlenkrollen von einer Antriebsvorrichtung antreibbar ist. Unter dem Arbeitstrum des Siebförderbandes sind dessen Unterseite abstützende Rollen angeordnet, mittels denen dem Arbeitstrum ein stufenfreier Ausgangsverlauf vorgebbar ist. Einer im wesentlichen mittig unter dem Arbeitstrum des Siebförderbandes angeordneten Rolle ist eine oberseitig gegen das Arbeitstrum des Siebförderbandes einrückbare Rolle zugeordnet, die mit der unterseitigen Rolle ein Stellmittel bildet, durch das dem Arbeitstrum ein stufenförmiger Verlauf vorgebbar ist. Die Stufe wird dabei durch eine Faltung mit einem Überhangbereich gebildet, die ein fortschreitendes, bereichsweisefreies Herabfallen der Bestandteile des an die Stufe herangeförderten Dammes aus Erdreich und Kartoffeln auf den weiterführenden Teil des Arbeitstrums des Siebförderbandes bewirkt.

Zur Verbesserung der Siebfunktion des Siebförderbandes ist es auch bekannt, das Arbeitstrum des Siebförderbandes durch eine Schwingklopfvorrichtung oder über den Förderantrieb in Schwingungen zu versetzen und durch die Rüttelwirkung die Auflösung des Verbundes der Bestandteile in dem herangeförderten Damm aus Kartoffeln enthaltendem Erdreich aufzulösen.

Die Erfindung befaßt sich mit dem Problem einer an die jeweiligen Bodenverhältnisse beim Erntevorgang anpaßbaren Verstärkung der Siebwirkung des Siebförderbandes unter besonderer Schonung der auf dem Siebförderband befindlichen Kartoffeln. Die Erfindung löst dieses Problem durch eine Siebfördervorrichtung mit den Merkmalen des Anspruchs 1. Hinsichtlich wesentlicher weiterer Ausgestaltungen wird auf die Ansprüche 2 bis 17 verwiesen.

Die Siebfördervorrichtung nach der Erfindung schafft die Möglichkeit zur Ausprägung von in der Stufenhöhe einstellbaren Stufen in Form von Vertiefungen, die den sie überlaufenden, die Kartoffeln enthaltenden Damm auf- und anschließend zusammenfächern und damit eine Relativbewegung der Dammbestandteile zueinander erzeugen, die das Absieben von Erdreich erheblich verstärkt. Zusätzliche Relativbewegungen ergeben sich dabei aus der Aufhebung der Parallelität des Verlaufes von Damm und Bandoberfläche, die das Absieben zusätzlich begünstigen. Über die stufenlos mögliche Verstellung der Stufenhöhe zwischen Null und einem Maximalwert hinaus kann auch die Zahl der Stufen passend auf die jeweiligen Bedingungen abgestimmt werden, wobei derartige Anpassungen gesteuert, aber auch in Abhängigkeit von einem festgestellten Absiebungsgrad geregelt werden können.

Weitere Einzelheiten und Vorteile ergeben sich aus der nachfolgenden Beschreibung und der Zeichnug, in der mehrere Ausführungsbeispiele des Gegenstands der Erfindung schematisch näher veranschaulicht sind. In der Zeichnung zeigen:
- Fig. 1: eine schematische Seitenansicht einer Siebfördervorrichtung nach der Erfindung mit einer Anzahl von im Arbeitstrum des Siebförderbandes ausgebildeten Stufen,
- Fig. 2: eine abgebrochene, vergrößerte Ansicht ähnlich Fig. 1 zur Veranschaulichung des Siebförderbandes mit stufenfreiem Verlauf,
- Fig. 3: einen abgebrochenen schematischen Schnitt nach der Linie A-A in Fig. 2,
- Fig. 4: eine Darstellung eines Fingers einer Leitschürze im Schnitt nach der Linie B-B in Fig. 2,
- Fig. 5: eine abgebrochene Seitenansicht ähnlich Fig. 2 einer zweiten Ausführung der Siebfördervorrichtung mit stufenförmigem Verlauf des Siebförderbandes,
- Fig. 6: eine Ansicht ähnlich Fig. 5 zur Veranschaulichung des Förderbandes der Siebfördervorrichtung mit stufenfreiem Verlauf,
- Fig. 7: eine Schnittdarstellung ähnlich Fig. 3 durch die Ausführung nach Fig. 6,
- Fig. 8: eine abgebrochene Seitenansicht ähnlich Fig. 5 einer dritten Ausführung einer Siebfördervorrichtung mit stufenförmigem Verlauf des Siebförderbandes,
- Fig. 9: eine Ansicht ähnlich Fig. 8 zur Veranschalichung des Siebförderbandes mit stufenfreiem Verlauf, und
- Fig. 10: eine Schnittdarstellung ähnlich Fig. 3 und 7 durch die Ausführung nach Fig. 9.

Die in der Zeichnung dargestellten Siebfördervorrichtungen für Hackfruchterntemaschinen, insbesondere für Kartoffelernte- und Vollerntemaschinen, weisen ein Förderband 1 auf, das um in einem Gehäuse 2 drehbar gelagerte Umlenkrollen 3, 4, 5, 6, 7 endlos umläuft, von denen die gleichachsig angeordneten Umlenkrollen 5 von einer nicht näher dargestellten Antriebsvorrichtung antreibbar sind. Der Antrieb kann von einem Hydraulikmotor gebildet oder von einem Zugfahrzeug beispielsweise über Gelenkwellen abgeleitet sein.

Das Siebförderband 1 besteht im einzelnen aus zumindest zwei außenseitig angeordneten Förderriemen 8 und auf diesen in untereinander gleichen Abständen parallel angeordneten Querförderstäben 9, die im Bereich flachgedrückter Enden mit den Förderriemen 8 vernietet sind. Dem Arbeitstrum des Siebförderbandes 1 ist eine Anzahl von bei dem dargestellten Beispiel sechs Stellmitteln 10 zugeordnet, mit deren Hilfe im Verlauf des Arbeitstrums Stufen 11 ausgebildet werden können. Die Zahl der Stellmittel 10 hängt von der Länge des Siebförderbandes 1 und dem Abstand zwischen den Stellmitteln 10 ab, der zweckmäßig in einem Bereich zwischen 250 mm und 750 mm liegt und vorzugsweise zwischen allen Stellmitteln 10 gleich groß ist.

Jedes Stellmittel 10 umfaßt zu Einstellungszwecken bewegliche Stellglieder 12, die stufenlos oder in Stufen zwischen einer auf den Verlauf des Arbeitstrums des Siebförderbandes 1 einwirkungsfreien Ausgangsstellung oberhalb der Förderriemen 8 und einer Endstellung verstellbar sind, in der sie im Arbeitstrum eine Stufe mit maximaler Stufenhöhe ausbilden. Diese beweglichen Stellglieder 12 wirken mit ortsfest angeordneten Stellgliedern 13 zusammen, die ihrerseits eine Anordnung unterhalb der Förderriemen 8 haben, in der sie dem Arbeitstrum des Siebförderbandes 1 bei in Ausgangsstellung befindlichen beweglichen Stellgliedern 12 einen stufenfreien Verlauf belassen.

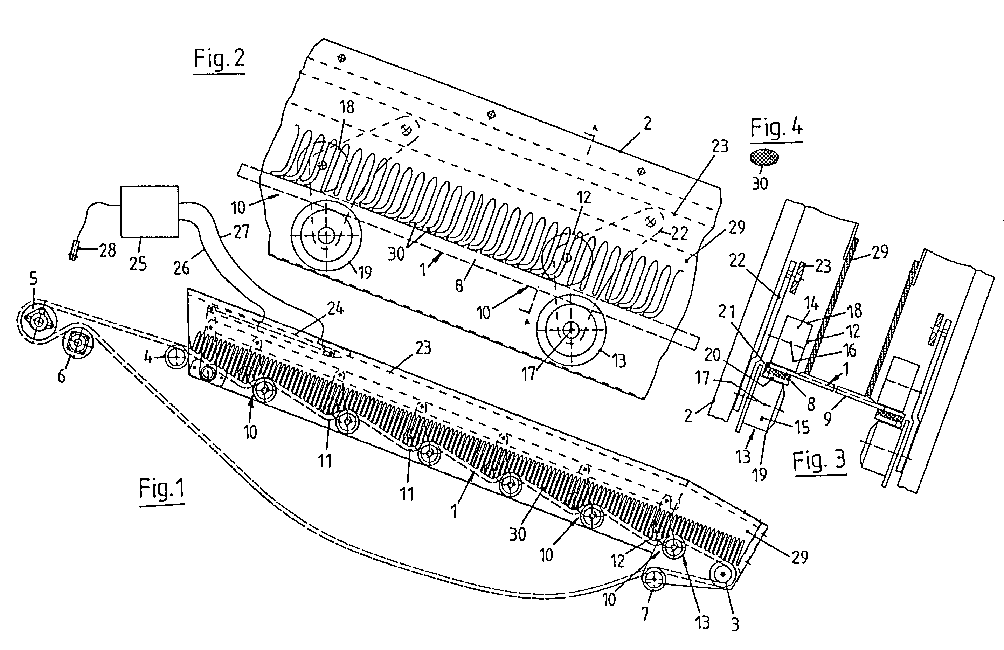

Vorzugsweise sind die Stellglieder 12, 13 als Drehkörper ausgebildet, von denen jedes Stellmittel 10 zwei Paare aufweist, die jeweils mit den beiden Förderriemen 8 unter- und oberseitig zusammenwirkend. Die Drehkörper 12, 13 bei der Ausführung nach Fig. 1 bis 3 sind von zylindrischen Rollen 14, 15 gebildet, die am Umfang eine zu ihrer Drehachse 16, 17 rotationssymmetrische Eingriffsfläche 18, 19 darbieten. Die Eingriffsfläche 18, 19 der Drehkörper 14, 15 kann durchgehend zylindrisch ausgebildet sein, kann jedoch bei zylindrischer Grundform auch eine Profilierung aufweisen, die mit Erhebungen auf der Ober- und Unterseite der Förderriemen 8 zusammenwirkt. Die Erhebungen auf der Riemenoberseite werden von den flachgedrückten Enden der Querförderstäbe 9 gebildet, und die auf der Riemenunterseite können von den flachgedrückten Enden der Querförderstäbe 9 entsprechenden, diesen gegenüberliegenden Flachstücken 20 gebildet sein, die von den Verbindungsnieten 21 mit durchgriffen sind.

Bei zur Aufnahme der Erhebungen profilierten Eingriffsflächen 18, 19 werden die Drehkörper 14, 15 durch das Siebförderband bei dessen Vorlauf in Umdrehung versetzt, wobei jedoch der Haupteingriff zwischen dem zylindrischen Teil der Eingriffsflächen 18, 19 der Drehkörper 14, 15 und den Oberflächen der Förderriemen 8 stattfindet. Im Falle von durchgehend zylindrischen Eingriffsflächen 18, 19, welche nur mit den Erhebungen auf den Förderriemen 8 in Eingriff gelangen, sind zweckmäßig die Eingriffsflächen 18, 19 an einer geräusch- und stoßdämmenden Umfangsschicht ausgebildet, die beispielsweise aus Gummi bestehen kann.

Bei den dargestellten Ausführungsbeispielen sind die Stellglieder 12 an einem Winkelhebel 22 gelagert, der um die Drehachse 17 des zugehörigen zweiten Stellgliedes 13 eines einem Förderriemen 8 zugeordneten Stellgliedpaares schwenkbar ist und seinen Schwenkantrieb von einer Stellstange 23 erhält, die von einem Druckmittelzylinder 24 betätigbar ist. Dieser Druckmittelzylinder 24 kann von einem Regler 25 über die Druckmittelleitungen 26, 27 beaufschlagt werden, der seine Führungsgröße von einem Meßgerät 28, beispielsweise einem Infrarot-Sensor oder einer Lichtschranke, erhält, mit der der Absiebungsgrad nahe dem Abgabeende des Siebförderbandes 1 ermittelt wird.

Mit Hilfe der Stellstangen 23, von denen je eine den jeweils einem Förderriemen 8 zugeordneten Paaren von Stellgliedern 12, 13 zugeordnet ist, können die Stellglieder 12 auf einem Kreisbogen um die Achse 17 der Stellglieder 13 aus ihrer jeweils in Fig. 2, 6 und 9 veranschaulichten Ausgangsstellung in eine Endstellung verschwenkt werden, in der sie im Zusammenwirken mit den Stellgliedern 13 die Stufen 11 ausbilden, wie sie in den Fig. 1, 5 und 8 mit jeweils maximaler Stufenhöhe veranschaulicht sind.

Bei den dargestellten Ausführungsbeispielen werden sämtliche beweglichen Stellglieder 12 gemeinsam und gleichförmig betätigt mit der Folge, daß im Sieförderband 1 gleichtiefe Stufen zur Ausbildung gelangen. Anstelle dieser besonders einfachen Form der Stellgliedbetätigung und der Stufenbildung ist es auch möglich und in besonderen Anwendungsfällen vorteilhaft, die beweglichen Stellglieder 12 eines Stellmittels 10 unabhängig von den Stellgliedern 12 anderer Stellmittel 10 zu betätigen. Mit einer solchen Einzelbetätigung oder einer gruppenweisen gleichzeitigen Betätigung der beweglichen Stellglieder 12 ist es möglich, Stufen 11 mit unabhängig wählbarer Tiefe im Siebförderband 1 auszubilden, z. B. vorteilhaft in der Weise, daß die im Arbeitstrum des Siebförderbandes 1 gebildeten Stufen 11 eine in Laufrichtung des Arbeitstrums abnehmende Stufenhöhe aufweisen. Ferner ist es möglich, die Zahl der Stufen bedarfsweise unter die Zahl der Stellmittel 10 zu verringern, wenn die Bodenverhältnisse beispielsweise von Hause aus eine gute Absiebung gewährleisten und eine Verstärkung der Absiebung nicht in vollem möglichen Umfange erwünscht ist. Die unterschiedlichen Möglichkeiten zur Steuerung bzw. zur Regelung der Stufenbildung im Siebförderband 1 können Programmen zugewiesen werden und diese gegebenenfalls computergesteuert in die Regelung einbezogen werden. Primäre Führungsgröße für solche Regelungsvorgänge ist der Absiebungsgrad, der erst dicht vor dem oberen Ende des Arbeitstrums des Siebförderbandes sein Maximum erreichen sollte, damit die auf dem Siebförderband zurückbleibenden Kartoffeln auf dem Siebförderband 1 keine längere, nach vollständigen Absiebung ungeschützte Förderstrecke zurücklegen.

Zur Abschirmung der Stellmittel 10 vor einem Kontakt mit den Bestandteilen eines auf das Arbeitstrum des Siebförderbandes 1 aufgegebenen Kartoffeldamms sind am Gehäuse 2 abgestützte seitliche Leitschürzen 29 vorgesehen, die parallel zur Laufrichtung des Arbeitstrums des Siebförderbandes verlaufen und im wesentlichen senkrecht zu dessen Oberseite ausgerichtet sind. Ihre untere Randkante befindet sich jeweils dicht innenseitig neben den Förderriemen 8, wobei der untere Randbereich der Leitschürzen 29 auf der Oberseite des Arbeitstrums des Siebförderbandes aufliegen oder dicht über dem Arbeitstrum des Siebförderbandes 1 enden kann, wenn das Arbeitstrum einen stufenfreien Verlauf hat. In jedem Fall ist der untere Teil der Leitschürzen 29 elastisch verformbar und an den Verlauf des Arbeitstrums des Siebförderbandes 1 anpaßbar, wenn in diesem Stufen 11 ausgebildet werden.

Bevorzugt ist der untere Teil der Leitschürzen 29 von dicht in Laufrichtung des Arbeitstrums des Siebförderbandes 1 parallel hintereinander angeordneten, elastisch biegsamen Leitfingern 30 gebildet, die bei Stufenbildung eine verstärkte elastische Auslenkung erfahren.

Infolge des Übergleitens der Leitfingerenden über die Querförderstäbe 9 des Seibförderbandes 1 erfahren diese eine Hin- und Herbewegung in und entgegen Laufrichtung des Arbeitstrums, so daß sie eine aktive Abschirmung bewirken. Die Leitfinger 30 können eine untereinander gleiche Länge haben (Fig. 2, 6 und 9), in welchem Falle sie auf dem unverformten Arbeitstrum unter gleichförmiger Verformung ihrer unteren Enden aufliegen, oder aber eine entsprechend der vorgesehenen maximalen Stufenbildung abgestufte Länge aufweisen, in welchem Falle sie bei Ausformung von Stufen von maximaler Stufenhöhe mit gleichmäßig verformten unteren Enden mit dem Arbeitstrum des Siebförderbandes 1 in Eingriff stehen und bei stufenfreiem Arbeitstrum zonenweise stärkere und schwächere Verformungen erfahren. Die Leitfinger 30 können im Querschnitt rund ausgebildet sein, oder aber einen ovalförmigen Querschnitt haben, wie das in Fig. 4 veranschaulicht ist. Derartige Leitschürzen sind auch bei Siebfördervorrichtungen einsetzbar, in deren Siebförderband keine Stufen ausgebildet werden.

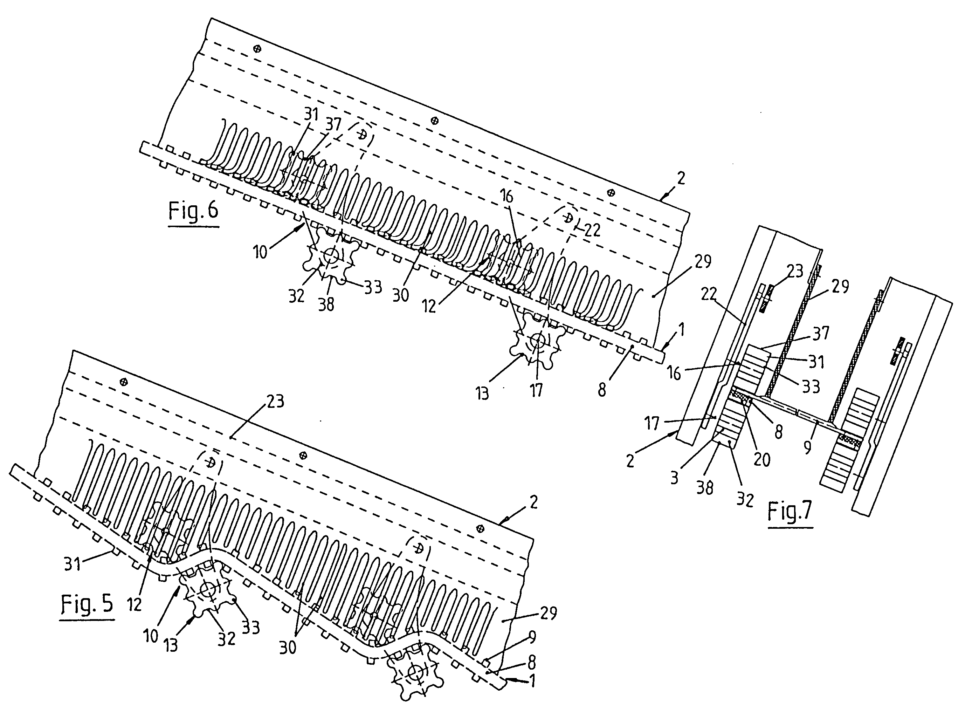

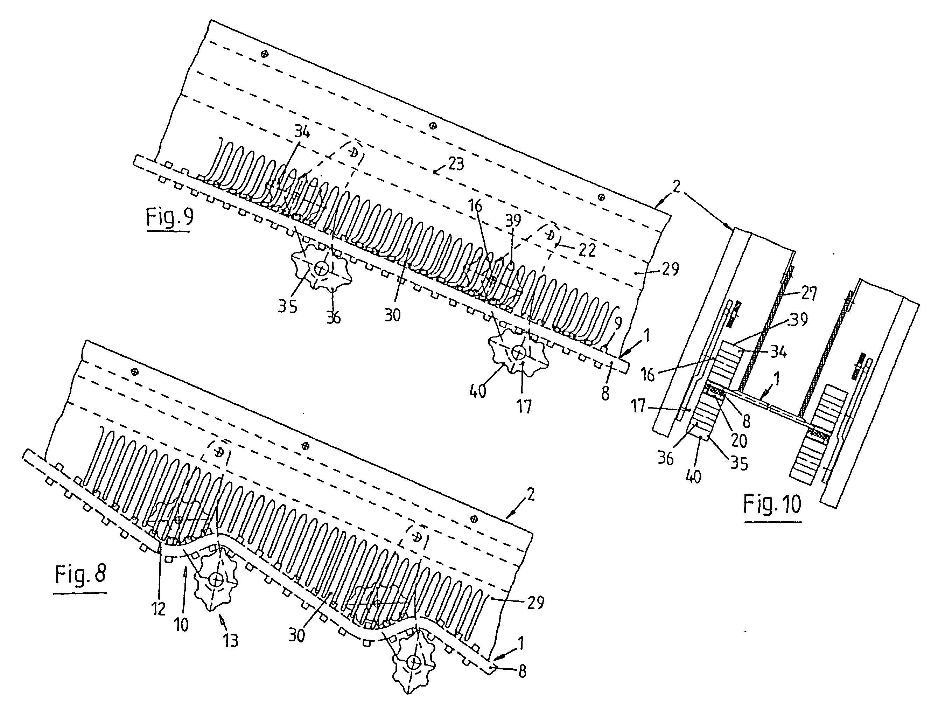

Die Ausführungen nach Fig. 5 bis 7 einerseits und nach Fig. 8 bis 10 andererseits unterscheiden sich von der Ausführung der Siebfördervorrichtung nach Fig. 1 bis 4 lediglich durch die abweichende Formgestaltung der Stellglieder 12, 13. Diese sind bei der Ausführung nach Fig. 5 bis 7 von in der Grundform quadratischen Drehkörpern 31, 32 mit am Umfang ausgeformten Erhebungen 33, und bei der Ausführung nach den Fig. 8 bis 10 von Drehkörpern 34, 35 mit annähernd elliptischer Grundform und am Umfang ausgeformten Erhebungen 36 gebildet.

Die Drehkörper 31, 32 der Ausführung der Siebfördervorrichtung nach Fig. 5 bis 7 haben eine Eingriffsfläche 37, 38 am Umfang, die eine quadratische Grundform darbietet, jedoch von den Erhebungen 33 überlagert ist, von denen je eine in den vier Ecken und eine weitere zwischen den Eckerhebungen vorgesehen ist.

Die Drehkörper 34, 35 der Siebfördervorrichtung nach den Fig. 8 bis 10 haben eine Eingriffsfläche 39, 40 am Umfang, die eine im wesentlichen elliptische Grundform darbietet und dabei ebenfalls von den Erhebungen 36 überlagert ist. Hier ist je eine Erhebung in fluchtender Verlängerung der Lang- und der Kurzachse der Ellipse und je eine weitere Erhebung zwischen diesen vorgesehen.

Die Erhebungen 33 bzw. 36 verleihen den Eingriffsflächen 37, 38 bzw. 39, 40 der Drehkörper 31, 32 bzw. 34, 35 eine Profilierung, durch die sie im Antriebssinne mit den Erhebungen auf der Oberseite und der Unterseite der Förderriemen 8 zusammenwirken, wobei die Drehkörper 31, 32; 34, 35 eines mit einem Förderriemen 8 des Siebförderbandes 1 zusammenwirkenden Drehkörperpaares so zueinander ausgerichtet sind, daß die Eingriffsflächen 37, 38 bzw. 39, 40 jeweils gleichzeitig mit ihren Bereichen mit maximalem Achsabstand und dementsprechend nachfolgend jeweils gleichzeitig mit Bereichen mit minimalem Achsabstand auf die Förderriemen 8 einwirken. Dabei laufen sie synchron um.

Die zusammenwirkenden Paare von asymmetrischen Drehkörpern 31, 32 bzw. 34, 35 sind in ihrer Ausgangsstellung gemäß Fig. 6 und 9, in der sie dem Arbeitstrum des Siebförderbandes 1 einen stufenfreien Verlauf belassen, so angeordnet, daß ihre Eingriffsflächen 37, 38 bzw. 39, 40 mit der Oberseite bzw. der Unterseite der Förderriemen 8 in Eingriff stehen und synchron umlaufen mit der Folge, daß im Siebförderband 1 vorübergehend flache Stufen jedesmal dann gebildet werden, wenn die Bereiche der Eingriffsflächen 37, 38 bzw. 39, 40 mit maximalen Achsabstand mit den Förderriemen 8 in Eingriff gelangen, wohingegen zwischenzeitlich bei Einwirkung der Bereiche der Eingriffsflächen 37, 38 bzw. 39, 40 mit minimalem Achsabstand auf die Förderriemen 8 das Arbeitstrum des Siebförderbandes 1 wieder seinen stufenfreien Verlauf einnimmt.

Da die Drehkörper 31, 32 vier Bereiche der Eingriffsflächen 37, 38 mit maximalen Achsabstand aufweisen, erfährt das Arbeitstrum des Siebförderbandes 1 bei seinem Vorlauf eine vierfache Stufenbildung je voller Umdrehung der Drehkörper 31, 32 erfährt. Durch diese rasch aufeinanderfolgende Bildung flacher Stufen wird das Arbeitstrum des Siebförderbandes 1 gewissermaßen in pulsierende Schwingungen versetzt und übt auf den Kartoffeldamm auf seiner Oberseite Rüttelbewegungen in Verbindung mit Änderungen des Oberflächenverlaufs aus, durch die die Absiebwirkung erheblich begünstigt wird.

Noch wesentlich kräftiger wird die Absiebwirkung verstärkt, wenn die Stellglieder 12, 13 eine dauernde Stufenbildung herbeiführen, wie sie in den Fig. 5 und 8, dort beispielhaft mit maximaler Stufentiefe, veranschaulicht ist. Zusätzlich zu den die Absiebwirkung verstärkenden Kräften, die in den Kartoffeldamm durch die Stufenbildung und durch die Asymmetrie der Drehkörper 31, 32 bzw. 34, 35 eingetragen werden, werden weitere Kräfte unter Erhöhung der Absiebwirkung dadurch auf den Kartoffeldamm ausgeübt, daß die Arbeitstrumbereiche zwischen zwei aufeinanderfolgenden Stellmitteln 10 mit asymmetrischen Drehkörpern eine mit dem Wechsel des Eingriffs der Bereiche der Eingriffsflächen 37, 38; 39, 40 mit maximalem Abstand und der Bereiche mit minimalen Achsabstand frequenzmäßig übereinstimmende Beschleunigungen und Verzögerungen in und entgegen Laufrichtung des Arbeitstrums des Siebförderbandes 1 erfahren.

Während bei den in der Grundform quadratischen Drehkörpern 31, 32 die Frequenz der stufenformverstärkenden und stufenformabschwächenden Verformungen doppelt so hoch ist, wie bei den Drehkörpern 34, 35 kann bei elliptischen bzw. ovalförmigen Drehkörpern 34, 35 die Verformungsamplitude im Verhältnis zur Gesamtabmessung der Drehkörper 34, 35 stärker ausgebildet werden.

Anstelle eines ständigen Eingriffs des profilierten Drehkörperpaare 31, 32 bzw. 34, 35 mit den Förderriemen 8 kann auch vorgesehen sein, daß diese in der Ausgangsstellung für einen stufenfreien Verlauf des Arbeitstrums des Siebförderbandes 1 außer Mitnahmeeingriff mit den Erhebungen auf den Förderriemen 8 gelangen, und nur bei permanenter Stufenbildung mit den Förderriemen 8 in Eingriff stehen. Dies kann beispielsweise konstruktiv dadurch verwirklicht werden, daß der Winkelhebel 22 zusätzlich um eine Schwenkachse, die mittig zwischen den Drehachsen 16, 17 gelegen ist, über die Stellung in Fig. 6 und 9 hinaus im Uhrzeigersinn begrenzt so weit verschwenkbar ist, bis beide Drehkörper 31, 32 bzw. 34, 35 von den Förderriemen 8 abgehoben sind. Bei der solchen Ausbildung ist der untere Drehkörper 32, 35 am unteren Ende des Winkelhebels 22 und in einem Lager des Gehäuses 2 zu lagern, wobei das Lager im Gehäuse 2 in einem bogenförmigen Schlitz begrenzt um die mittlere Schwenkachse des Winkelhebels 22 verschieblich geführt ist. Für die mittlere Schwenkachse des Winkelhebels gilt dabei, daß die Lagerung in einem bogenförmigen Schlitz begrenzt um die Drehachse 17 der Drehkörper 32, 35 schwenkbar ist, wobei die Schlitzenden als Anschläge jeweils die Schwenkbereiche definieren.

Um bei völligem Aufheben des Eingriffs zwischen den Drehkörpern 31, 32 bzw. 34, 35 und den Förderriemen 8 den Synchronlauf sicherzustellen, könnte jedem Paar zusammenwirkender Drehkörper ein Synchronisierungsgetriebe zugeordnet sein.

## Patentansprüche

1. Siebfördervorrichtung für Hackfruchterntemaschinen, mit einem endlosen Siebförderband (1), das aus zumindest zwei Förderriemen (8) und auf diesen befestigten Querförderstäben (9) besteht und um in einem Gehäuse (2) drehbar gelagerte Umlenkrollen (3,4,5,6) umläuft, von denen zumindest eine Gruppe von gleichachsig angeordneten Umlenkrollen (5) von einer Antriebsvorrichtung antreibbar ist, wobei unter dem Arbeitstrum des Siebförderbandes (1) dessen Unterseite abstützende Drehkörper (13) angeordnet sind, mittels denen dem Arbeitstrum ein stufenfreier Ausgangsverlauf vorgebbar ist, und wobei zumindest einem der unterseitigen Drehkörper (13) ein oberseitig auf das Arbeitstrum des Siebförderbandes (1) einwirkender Drehkörper (12) zugeordnet ist, der mit dem unterseitigen Drehkörper (13) ein Stellmittel (10) bildet, durch das dem Arbeitstrum ein stufenförmiger Verlauf vorgebbar ist, **dadurch gekennzeichnet, daß** die unterseitigen Drehkörper (13) ortsfest im Gehäuse (2) gelagert sind und lediglich der zumindest eine oberseitige Drehkörper (12) gegen die Oberseite des Arbeitstrums einrückbar ist und durch Herabdrücken im Arbeitstrum zwischen zwei unterseitigen Drehkörpern (13) eine Stufe (11) ausbildet, in der das Arbeitstrum in Förderrichtung gesehen einen gegenüber dem stufenfreien Ausgangsverlauf zunächst schräg abfallenden und danach einen zum nächsten unterseitigen Drehkörper (13) hin wieder ansteigenden Verlauf erhält.

2. Siebfördervorrichtung nach Anspruch 1, **dadurch gekennzeichnet, daß** dem Arbeitstrum des Siebförderbandes (1) mehrere über dessen Länge in gegenseitigem Abstand verteilt angeordnete Stellmittel (10) zugeordnet sind.

3. Siebfördervorrichtung nach Anspruch 1 oder 2, **dadurch gekennzeichnet, daß** die Stellmittel (10) in untereinander gleichem Abstand in Laufrichtung des Arbeitstrums des Siebförderbandes hintereinander angeordnet sind.

4. Siebfördervorrichtung nach einem der Ansprüche 1 bis 3, **dadurch gekennzeichnet, daß** die Stellmittel (10) gemeinsam oder einzeln oder gruppenweise unabhängig voneinander betätigbar sind.

5. Siebfördervorrichtung nach einem der Ansprüche 1 bis 4, **dadurch gekennzeichnet, daß** jedes Stellmittel (10) Stellglieder (12, 13) aufweist, die zwischen einer auf den Verlauf des Arbeitstrums des Siebförderbandes (1) einwirkungsfreien Ausgangsstellung und einer Endstellung stufenlos oder in Stufen verstellbar sind, in der sie der Stufe im Arbeitstrum eine maximale Stufenhöhe vorgeben.

6. Siebfördervorrichtung nach Anspruch 4 und 5, **dadurch gekennzeichnet, daß** die beweglichen Stellglieder (12) in eine Einstellung überführbar sind, in der die von ihnen im Arbeitstrum des Siebförderbandes (1) gebildeten Stufen (11) eine untereinander gleiche Stufenhöhe haben.

7. Siebfördervorrichtung nach Anspruch 4 und 5, **dadurch gekennzeichnet, daß** die beweglichen Stellglieder (12) in eine Einstellung überführbar sind, in der die von ihnen im Arbeitstrum des Siebförderbandes (1) gebildeten Stufen (11) eine in Laufrichtung des Arbeitstrums abnehmende Stufenhöhe aufweisen.

8. Siebfördervorrichtung nach einem der Ansprüche 1 bis 7, **dadurch gekennzeichnet, daß** die Verstellung der Stellmittel (10) in Abhängigkeit vom Absiebungsgrad steuer- oder regelbar ist.

9. Siebfördervorrichtung nach einem der Ansprüche 1 bis 8, **dadurch gekennzeichnet, daß** jedes Stellmittel (10) paarweise mit den Förderriemen unter- und oberseitig zusammenwirkende Drehkörper (14, 15; 31, 32; 34, 35) als Stellglieder (12, 13) aufweist.

10. Siebfördervorrichtung nach Anspruch 9, **dadurch gekennzeichnet, daß** die oberen, gegen die Oberseite des Arbeitstrums einrückbaren Stellglieder (12) mittels eines Stellhebels (23) auf einem Kreisbogen um die Drehachse (17) des zugehörigen unteren Stellglieds verstellbar sind.

11. Siebfördervorrichtung nach Anspruch 9 oder 10, **dadurch gekennzeichnet, daß** die Drehkörper (14, 15) eine zu ihrer Drehachse (16, 17) rotationssymmetrische Eingriffsfläche (18, 19) am Umfang aufweisen.

12. Siebfördervorrichtung nach Anspruch 9 oder 10, **dadurch gekennzeichnet, daß** die Drehkörper (31, 32; 34, 35) eine zu ihrer Drehachse (16, 17) asymmetrisch verlaufende Eingriffsfläche aufweisen.

13. Siebfördervorrichtung nach Anspruch 12, **dadurch gekennzeichnet, daß** die Eingriffsfläche (37, 38; 39, 40) der Drehkörper (31, 32; 34, 35) die Grundform eines Vierecks oder einer Ellipse aufweist.

14. Siebfördervorrichtung nach Anspruch 12 oder 13, **dadurch gekennzeichnet, daß** die Eingriffsflächen (37, 38; 39, 40) der Drehkörper (31, 32; 34, 35) eine mit Erhebungen auf der Ober- und der Unterseite der Förderriemen (8) im mitnehmenden Antriebssinne zusammenwirkende Profilierung (33, 36) aufweisen.

15. Siebfördervorrichtung nach einem der Ansprüche 12 bis 14, **dadurch gekennzeichnet, daß** die Drehkörper (31, 32; 34, 35) eines mit einem Förderriemen (8) des Siebförderbandes (1) zusammenwirkenden Drehkörperpaares (31, 32; 34, 35) so zueinander ausgerichtet sind, daß die Eingriffsflächen mit ihren Bereichen mit maximalem Achsabstand einerseits und mit ihren Bereichen mit minimalem Achsabstand andererseits jeweils gleichzeitig auf den Förderriemen (8) einwirken, und die das Drehkörperpaar bildenden Drehkörper (31, 32; 34, 35) synchron zueinander umlaufen.

16. Siebfördervorrichtung nach einem der Ansprüche 1 bis 15, **dadurch gekennzeichnet, daß** am Gehäuse (2) abgestützte seitliche Leitschürzen (29) vorgesehen sind, die parallel zur Laufrichtung des Arbeitstrums des Siebförderbandes (1) verlaufen und im wesentlichen senkrecht zu dessen Oberseite ausgerichtet sind, auf der Oberseite des Arbeitstrums jeweils dicht innenseitig neben den Förderriemen (8) aufliegen und mit ihrem verformbaren unteren Teil an den Verlauf des Arbeitstrums anpaßbar sind.

17. Siebfördervorrichtung nach Anspruch 16, **dadurch gekennzeichnet, daß** der untere Teil der Leitschürzen (29) von dicht in Laufrichtung des Arbeitstrums des Siebförderbandes (1) hintereinander angeordneten, elastisch biegsamen Leitfingern (30) gebildet ist.

## Claims

1. A screening conveyor apparatus for root crop harvesting machines, with an endless screening conveyor belt (1) which consists of at least two conveyor strands (8) and transverse conveyor rods (9) fixed thereon and revolving around direction-reversing rollers (3, 4, 5, 6) rotatably mounted in a housing (2) and of which at least one group of equi-axially disposed direction reversing rollers (5) is adapted to be driven by a drive means whereby under the working strands of the screening conveyor belt (1), rotating members (13) are disposed which support its underside and by means of which a stepless start-up pattern can be imposed upon the working strand and whereby at least one of the rotating members (13) underneath has associated with a rotating member (12) which is situated above and which acts on the working strand of the screening conveyor belt (1), said rotating member (12) forming, together with the rotating member (13) on the underside, a positioning means (10) by which it is possible to impose a stepless pattern on the working strand, **characterised in that** the underlying rotating members (13) are rigidly mounted in the housing (2) and only the at least one upper rotating member (12) is adapted to be engaged against the top of the working strand forming, by the downwards pressure in the working strand between two underlying rotating members (13), a step (11) in which the working strand, viewed in the direction of conveyance, follows a path which in relation to the stepless starting pattern, firstly falls away obliquely and then rises again to the next underlying rotating member (13).

2. A screening conveyor apparatus according to claim 1, **characterised in that** associated with the working strand of the screening conveyor belt (1) are a plurality of positioning means (10) distributed at intervals over its length.

3. A screening conveyor apparatus according to claim 1 or 2, **characterised in that** the positioning means (10) are disposed at equal intervals behind one another in the running direction of the working strand of the screening conveyor belt.

4. A screening conveyor apparatus according to one of claims 1 to 3, **characterised in that** the positioning means (10) are adapted to be actuated jointly or individually or in groups independently of one another.

5. A screening conveyor apparatus according to one of claims 1 to 4, **characterised in that** each positioning means (10) has positioning members (12, 13) which are displaceable between a starting position in which they have no effect on the pattern of the working strand of the screening conveyor apparatus (1) and an extreme position, steplessly or in steps in which they impose a maximum step height on the step in the working strand.

6. A screening conveyor apparatus according to claims 4 and 5, **characterised in that** the movable positioning members (12) can be moved into a setting in which the steps (11) formed in the working strand of the screening conveyor apparatus (1) have the same step height as one another.

7. A screening conveyor apparatus according to claim 4 and 5, **characterised in that** the movable positioning members (12) can be moved into a setting in which the steps (11) formed by them in the working strand of the screening conveyor apparatus (1) have a step height which diminishes in the direction of movement of the working strand.

8. A screening conveyor apparatus according to one of claims 1 to 7, **characterised in that** the displacement of the positioning means (10) is controllable or regulable as a function of the degree of screening.

9. A screening conveyor apparatus according to one of claims 1 to 8, **characterised in that** each positioning means (10) has as positioning members (12, 13) rotating members (14, 15; 31, 32; 34, 35) which are disposed in pairs above and below the conveyor strands in co-operating manner.

10. A screening conveyor apparatus according to claim 9, **characterised in that** the upper positioning members (12) which can be applied against the top of the working strand are displaceable by means of a positioning lever (23) on an arc about the axis (17)of rotation of the associated positioning member beneath it.

11. A screening conveyor apparatus according to claim 9 or 10, **characterised in that** the rotating members (14, 15) have on their periphery an engaging surface (18, 19) which is rotationally symmetrical with their axis of rotation (16, 17).

12. A screening conveyor apparatus according to claim 9 or 10, **characterised in that** the rotating members (31, 32; 34, 35) have an engaging surface which extends asymmetrically in relation to their axis of rotation (16, 17).

13. A screening conveyor apparatus according to claim 12, **characterised in that** the engaging surface (27, 28; 39, 40) on the rotating members (31, 32; 34, 35) has the basic form of a quadrilateral figure or of an ellipse.

14. A screening conveyor apparatus according to claim 12 or 13, **characterised in that** the engaging surfaces (37, 38; 39, 40) of the rotating members (31, 32; 34, 35) have a profiling (33, 36) co-operating with raised portions on the upper and under sides of the conveyor strands (8) in the entraining direction of work.

15. A screening conveyor apparatus according to one of claims 12 to 14, **characterised in that** the rotating members (31, 32; 34, 35) of a pair of rotating members (31, 32; 34, 35) co-operating with a conveyor strand (8) of the screening conveyor belt (1) are so orientated in relation to each other that on the one hand the portions of the engaging surfaces which have a maximum distance between centres and their portions which have minimum spacing between centres in each case act simultaneously on the conveyor belts (8) and **in that** the rotating members (31, 32; 34, 35) constituting a pair of rotating members rotate in synchronism with each other.

16. A screening conveyor apparatus according to one of claims 1 to 15, **characterised in that** lateral guide aprons (29) braced on the housing (2) are provided which extend parallel with the direction of movement of the working strand of the screening conveyor apparatus (1) and are aligned substantially at right-angles to its upper side, rest on the upper face of the working strand in each case having their insides closely adjacent to the conveyor strand (8) while their deformable lower part can be adapted to the run of the working strand.

17. A screening conveyor apparatus according to claim 16, **characterised in that** the bottom part of the guide aprons (29) is formed by elastically flexible guide fingers (30) disposed one behind another in the direction of movement of the working strand screening conveyor belt (1).

## Revendications

1. Dispositif transporteur et trieur pour des récolteuses de tubercules comprenant une bande transporteuse et trieuse, sans fin (1), formée d'au moins deux courroies transporteuses (8) reliées à des barres transversales transporteuses (9) ainsi que de cylindres de renvoi (3, 4, 5, 6) montés à rotation dans un caisson (2), au moins un groupe de rouleaux de renvoi (5) porté par le même axe étant entraîné par un dispositif d'entraînement et le brin actif de la bande (1) est soutenu par des organes rotatifs (13) soutenant la face inférieure de la bande, et conduisant le brin actif suivant un tracé de sortie sans gradin et, un organe rotatif (12) agissant sur la face supérieure du brin actif de la bande (1), pour former avec l'organe rotatif (13) appliqué contre la face inférieure, un moyen de réglage (10) qui permet de donner au brin actif un tracé en gradin,
**caractérisé en ce que**
les organes de roulement (13) du côté inférieur sont montés de manière fixe dans le caisson (2) et uniquement au moins un organe rotatif (12) du côté supérieur, peut être poussé contre la face supérieure du brin actif et être enfoncé dans le brin actif, entre deux organes de rotation (13) correspondant au côté inférieur, pour former un gradin (11) par lequel le brin actif suit dans la direction de transfert, un tracé de sortie tout d'abord descendant par rapport au tracé sans gradin, puis remontant vers l'organe de roulement inférieur (13) suivant.

2. Dispositif de transfert et de triage selon la revendication 1,
**caractérisé en ce que**
le brin actif de la bande transporteuse et trieuse (1) comporte plusieurs moyens de réglage (10) répartis sur sa longueur à des intervalles réciproques.

3. Dispositif de transfert et de triage selon la revendication 1 ou 2,
**caractérisé en ce que**
les moyens de réglage (10) sont prévus dans des positions équidistantes dans la direction de circulation du brin actif de la bande transporteuse et trieuse.

4. Dispositif de transfert et de triage selon l'une quelconque des revendications 1 à 3,
**caractérisé en ce que**
les moyens de réglage (10) sont commandés en commun ou séparément ou par groupes, indépendamment les uns des autres.

5. Dispositif de transfert et de triage selon l'une quelconque des revendications 1 à 4,
**caractérisé en ce que**
chaque moyen d'actionnement (10) comprend des organes d'actionnement (12, 13) réglables entre une position de repos sans action sur le tracé du brin actif de la bande transporteuse (1) et une position de fin de course, de manière continue ou par paliers, position dans laquelle le gradin du brin actif est à sa hauteur maximale.

6. Dispositif de transfert et de triage selon l'une des revendications 4 et 5,
**caractérisé en ce que**
les organes d'actionnement mobiles (12) peuvent être conduits dans une position de réglage dans laquelle le gradin (11) formé par cet organe dans le brin actif de la bande (1) présente des hauteurs de gradin différentes.

7. Dispositif de transfert et de triage selon l'une des revendications 4 et 5,
**caractérisé en ce que**
les organes d'actionnement mobiles (12) peuvent passer dans une position de réglage dans laquelle les gradins (11) formés par le brin actif de la bande (1) ont une hauteur de gradin diminuant dans la direction de circulation du brin actif.

8. Dispositif de transfert et de triage selon l'une quelconque des revendications 1 à 7,
**caractérisé en ce que**
le réglage du moyen d'actionnement (10) est commandé ou réglé en fonction du degré de triage.

9. Dispositif de transfert et de triage selon l'une quelconque des revendications 1 à 8,
**caractérisé en ce que**
chaque moyen d'actionnement (10) comporte des organes rotatifs (14, 15 ; 31, 32 ; 34, 35) comme organes d'actionnement (12, 13) pour coopérer par paires avec les courroies transporteuses, en agissant sur leur côté supérieur et leur côté inférieur.

10. Dispositif de transfert et de triage selon la revendication 9,
**caractérisé en ce que**
les organes d'actionnement (12) supérieurs, qui peuvent être enfoncés dans la face supérieure du brin actif sont réglables à l'aide d'un levier d'actionnement (23) suivant un arc de cercle autour de l'axe de rotation (17) de l'organe d'actionnement inférieur correspondant.

11. Dispositif de transfert et de triage selon la revendication 9 ou 10,
**caractérisé en ce que**
les organes rotatifs (14, 15) ont une périphérie présentant des surfaces d'attaque à symétrie de rotation (18, 19) par rapport à leur axe de rotation (16, 17).

12. Dispositif de transfert et de triage selon les revendications 9 ou 10,
**caractérisé en ce que**
les organes rotatifs (31, 32, 34, 35) ont une surface d'attaque asymétrique par rapport à leur axe de rotation (16, 17).

13. Dispositif de transfert et de triage selon la revendication 12,
**caractérisé en ce que**
la surface d'action (37, 38, 39, 40) des organes rotatifs (31, 32, 34, 35) a une section de base de carré ou d'ellipse.

14. Dispositif de transfert et de triage selon la revendication 12 ou 13,
**caractérisé en ce que**
les surfaces d'action (37, 38 ; 39, 40) des organes rotatifs (31, 32 ; 34, 35) ont un profil (33, 36) coopérant dans le sens de l'entraînement avec les bossages de la face supérieure et de la face inférieure des courroies transporteuses (8).

15. Dispositif de transfert et de triage selon l'une quelconque des revendications 12 à 14,
**caractérisé en ce que**
les organes rotatifs (31, 32 ; 34, 35) d'une paire d'organes rotatifs (31, 32 ; 34, 35) coopérant avec l'une des courroies transporteuses (8) de la bande transporteuse et trieuse (1) sont alignés les uns par rapport aux autres pour que les surfaces d'attaque avec d'une part les zones d'écartement axial maximum et d'autre part avec les zones d'écartement axial minimal, agissent chaque fois simultanément sur les courroies transporteuses (8) et les organes rotatifs (31, 32 ; 34, 35) qui forment la paire d'organes rotatifs, tournent en synchronisme.

16. Dispositif de transfert et de triage selon l'une quelconque des revendications 1 à 15,
**caractérisé en ce que**
le caisson (2) comporte des tabliers de guidage (29) s'appuyant latéralement, et parallèles à la direction de circulation du brin de travail de la bande transporteuse et trieuse (1) en étant alignés essentiellement perpendiculairement à la surface supérieure de la bande et s'appuyant sur la face supérieure du brin actif, chaque fois de manière rapprochée du côté intérieur à côté des courroies transporteuses (8) et leur partie inférieure déformable s'adapte au tracé du brin actif.

17. Dispositif de transfert et de triage selon la revendication 16,
**caractérisé en ce que**
la partie inférieure des panneaux de guidage (29) sont constitués par des doigts de guidage (30), élastiques souples, juxtaposés étroitement les uns derrière les autres dans la direction de circulation du brin actif de la bande transporteuse et trieuse.
